**Europäisches Patentamt**

**European Patent Office**

**Office européen des brevets**

(19)

(11) Veröffentlichungsnummer : **0 049 815 B2**

(12) **NEUE EUROPÄISCHE PATENTSCHRIFT**

(45) Veröffentlichungstag der neuen Patentschrift :
**10.04.91 Patentblatt 91/15**

(51) Int. Cl.⁵ : **C08J 3/12, C09G 1/00, C04B 24/38, C09J 101/26, // C08L1/26**

(21) Anmeldenummer : **81107753.6**

(22) Anmeldetag : **30.09.81**

(54) Verfahren zur Herstellung von Mikropulvern aus Celluloseether.

(30) Priorität : **08.10.80 DE 3038001**

(43) Veröffentlichungstag der Anmeldung :
**21.04.82 Patentblatt 82/16**

(45) Bekanntmachung des Hinweises auf die Patenterteilung :
**18.09.85 Patentblatt 85/38**

(45) Bekanntmachung des Hinweises auf die Entscheidung über den Einspruch :
**10.04.91 Patentblatt 91/15**

(84) Benannte Vertragsstaaten :
**AT BE CH DE FR GB IT LI LU NL SE**

(56) Entgegenhaltungen :
**DE-A- 1 411 892
DE-A- 1 454 824
DE-A- 2 556 821
DE-B- 2 458 998
FR-A- 1 581 954**

(73) Patentinhaber : **Henkel Kommanditgesellschaft auf Aktien
Postfach 1100 Henkelstrasse 67
W-4000 Düsseldorf-Holthausen (DE)**

(72) Erfinder : **Carduck, Franz-Josef, Dr.
Landstrasse 18
W-5657 Haan (DE)**
Erfinder : **Rähse, Wilfried, Dr.
Kohlhagenstrasse 44
W-4000 Düsseldorf 13 (DE)**
Erfinder : **Wüst, Willi, Dr.
Fasanenring 32
W-4030 Ratingen-Hösel (DE)**
Erfinder : **Pabel, Hans
Parkstrasse 8
W-4000 Düsseldorf 30 (DE)**

(74) Vertreter : **von Kreisler, Alek, Dipl.-Chem. et al
Patentanwälte Von Kreisler-Selting-Werner,
Deichmannhaus am Hauptbahnhof
W-5000 Köln 1 (DE)**

EP 0 049 815 B2

## Beschreibung

Die vorliegende Erfindung betrifft ein Verfahren zur Herstellung von Mikropulvern aus Celluloseether durch das auf einfache Weise feine und feinste Pulver, die nach den bisherigen Verfahren nicht zugänglich sind, erhalten werden können.

Es sind zahlreiche Verfahren zur Zerkleinerung und Mahlung der verschiedenen Celluloseethern bekannt. Eine Grobzerkleinerung kann in einer Schneidmühle erfolgen. Dabei fällt normalerweise ein wolliges, das heißt ein langfaseriges Produkt mit niedrigem Schüttgewicht an. Nach einem anderen Verfahren erzeugt man ein Vlies aus Celluloseethern durch Friktionieren in Walzen. Es entsteht ein Walzvlies, das gebrochen und in Prallzerspanern oder Stiftmühlen zerkleinert wird. Der Nachteil dieses Verfahrens besteht darin, daß einerseits stets ein erheblicher Anteil an langfasrigem Gut erhalten bleibt, der abgesiebt und rezirkuliert werden muß und daß andererseits nur relativ grobkörnige Pulver zugänglich sind.

Ferner sind Verfahren bekannt, in welchen die bei der Produktion von Celluloseethern anfallenden feuchten Reaktionsprodukte unter weiterem Wasserzusatz verknetet, grob zerkleinert und anschließend in Hammermühlen gemahlen werden. Die Trocknung des feuchten Produktes erfolgt erst im Anschluß daran. Jedoch sind nach diesem Verfahren praktisch nur Granulate zu erhalten, die nach weiterer Mahlung wieder eine mehr oder weniger ausgeprägt langfasrige Struktur aufweisen.

Es ist ferner bekannt, Celluloseether in Kugel- oder Schwingmühlen zu vermahlen. Für die Herstellung von Celluloseether-Feinpulvern mit Teilchengrößen von etwa 90% kleiner als 100 μm sind allerdings sowohl bei Kugel- als auch bei Schwingmühlen zahlreiche Mühlendurchgänge unter Rezirkulation des Siebüberschlages notwendig. Da bei jedem Mühlendurchgang ein Abbau der Makromoleküle stattfindet, erfüllen die Produkte nicht mehr die Anforderung, hochviskose wäßrige Lösungen zu bilden. Bei dem bei feinen Pulvern erforderlichen mehrmaligen Mühlendurchgängen kann der Verlust an Viskosität etwa 70 bis 75% der Ausgangsviskosität betragen.

Schließlich sind diese Produkte wegen der unterschiedlichen Anzahl an Mühlendurchgängen sehr inhomogen bezüglich der Kettenlängenverteilung der Makromoleküle.

Aufgabe der vorliegenden Erfindung war es daher, ein Verfahren zur Herstellung von Mikropulvern aus Celluloseethern zu finden, das die den bekannten Verfahren anhaftenden Nachteile nicht hat. Insbesondere war ein Ziel der vorliegenden Erfindung, ein Zerkleinerungsverfahren zu finden, das bei nur minimalem Abbau der Cellulosemakromoleküle zu äußerst feinen Pulvern führt, die auch eine gute Rieselfähigkeit aufweisen. Mit diesem Ziel war die Aufgabe verbunden bei wasserlöslichen Celluloseethern solche Mikropulver, deren Korngröße zu mindestens 98 Gew.-% unter 100 μm liegt, herzustellen, die hochviskose Lösungen liefern.

Erfindungsgemäß wird diese Aufgabe dadurch gelöst, daß man in 2 aufeinander folgenden Stufen
a) Celluloseether die eine feinfaserige, beziehungsweise wattige, beziehungsweise wollige Struktur aufweisen mittels einer Schwing- oder Kugelmühle, vorzugsweise in gekühlter Ausführung, oder Pelletpresse, in eine so weit versprödete, verfestigte Form überführt, daß beim einmaligen Durchgang durch eine Laborstrahlmühle 98 Gew.-% (Auswahlkriterium) des Materials kleiner als 100 μm ist, und anschließend
b) das vorbehandelte Material einer Mahlung in einer Strahlmühle unterzieht, wobei eine Korngrößenverteilung von mindestens 98 Gew.-% unter 100 μm erreicht wird.

Die Versprödung (Verfestigung) erfolgt zweckmäßig in einer Schwing- oder Kugelmühle, vorzugsweise in gekühlter Ausführung, oder aber in einer Pelletpresse. Die hier bewirkte Destrukturierung in der Verfestigungsstufe soll so weitreichend sein, daß sowohl eine wollige beziehungsweise wattige Faserstruktur beseitigt wird als auch eine Versprödung eines zähen, teilweise plastischen Stoffes erfolgt. Das Ausmaß der Versprödung (Verfestigung) läßt sich meist an der Zunahme des Schüttgewichtes verfolgen.

Die Versprödung muß ein bestimmtes Maß erreicht haben, um in der Mahlstufe die gewünschte geringe Korngröße zu erreichen. Am einfachsten prüft man die Voraussetzungen, indem man unter Standardbedingungen in einer Laborstrahlmühle bei einem Luftdurchsatz von 150 Nm³/h und einem Feststoffdurchsatz von 5 kg/h bei einer charakteristischen Größe von 1 foot ($\widehat{=}$30,5 cm) mahlt. Haben bei einmaligem Durchgang 98% des Produktes eine Korngröße kleiner als 100 μm, war die Versprödung ausreichend.

Erfindungsgemäß läßt sich eine Verdichtung und Versprödung unter gleichzeitiger Destrukturierung in einer Pelletpresse oder gegebenenfalls in einer Brikettiereinrichtung vornehmen. Hierbei geht man aus wirtschaftlichen Gründen meist von unverdichtetem Material aus, obwohl sich auch verdichtetes verarbeiten läßt.

Die Pellets können grob gebrochen und anschließend getrocknet beziehungsweise direkt der Feinmahlung zugeführt werden. Erfindungsgemäß liegt der Vorteil dieses Verfestigungsverfahrens im äußerst geringen Abbau der Makromoleküle, wobei Werte von 2 bis 25% einschließlich der nachfolgenden Mahlstufe üblich sind.

Die Destrukturierung kann besonders gut in einer Schwingmühle durchgeführt werden. Auch eine Kugelmühle ist in ähnlicher Weise geeignet. In diesen Mühlen tritt eine Verfestigung der Celluloseether ein. Die Betriebsbedingungen der Mühlen werden so gewählt, daß eine besonders intensive Vertestigung auftritt. Bei

2

aller bekannten Celluloseether, wie verschiedene Alkyl- und Alkylhydroxyalkyl- sowie Carboxyalkyl-Cellulosen.

Die erfindungsgemäß hergestellten Pulver finden vielseitige Anwendung beispielsweise in der Bauindustrie und auf dem Heimwerkersektor, als Zusatz zu Putzmassen, Mörtel, Kies, Zement und Gips.

Vorzugsweise werden die gemahlenen Celluloseether in der Bauindustrie zur Bindung des Wassers den Putzmassen zugesetzt. Bedingt durch die heutige Herstellung der Putzmassen in Maschinen müssen sich hochwirksame Produkte extrem schnell lösen. Die Lösegeschwindigkeit nimmt in dem Maße zu, wie die Korngrößenverteilung zu feineren Pulvern hin verschoben wird. Daher sind für diesen Anwendungszweck in zunehmendem Maße und Mikropulver mit engem Kornverteilungsspektrum gefragt. Bei Zusatz von Mikropulvern zu Maschinenputzen wird das momentane Wasserrückhaltevermögen derart verbessert, daß, verglichen mit den marktgängigen Produkten, die Zusatzmengen ohne Qualitätseinbußen um 20 bis 50% reduziert werden können.

Beispiele

Die Testung, ob in der Versprödungsstufe bzw. Verfestigungsstufe ein ausreichender Grad dieser Vorbehandlung erreicht war, wurde in einer Laborstrahlmühle der Firma Fluid-Energy «Jet-o-mizer» durchgeführt. Sie hatte als Charakteristikum einen Luftdurchsatz von 150 Nm³/h sowie einen Feststoffdurchsatz von 5 kg/h und eine Größe von 1 foot ($\approx$ 30,5 cm). Es wurde festgelegt, daß unter diesen Standardbedingungen bei einmaligem Mühlendurchgang 98 Gew.% des eingeführten Materials kleiner als 100 μm sein soll. Wird diese Bedingung erreicht, liegt eine hinreichende Verfestigung bzw. Versprödung vor. Die Korngrößenverteilung wurde dabei in einem standardisierten Luftstrahlsieb während 3 Minuten bestimmt.

In den nachfolgenden Tabellen 1a und 1b (Vergleichsversuche) ist in Abhängigkeit vom eingesetzten Material und Versprödung bzw. technisch üblichen Verdichtung (Vergleich) die Korngröße wiedergegeben.

Tabelle 1a

| Ausgangsmaterial | erfindungsgemäße Versprödung | Korngröße nach Mahlung in Strahlmühle unter Standardbedingungen |
|---|---|---|
| Viskosität n. Brookfield | (% > 100 μm) | (% > 100 μm) |
| Methylhydroxyethylcellulose 23 000 mPa.s | ja, Pelletpresse (40 %)[+] | < 0,2 % |
| Carboxymethylcellulose 4 000 mPa.s (88 %) | ja, Schwingmühle (11 %) | 0,8 % |
| Hydroxyethylcellulose 22 500 mPa.s (88 %) | ja, Schwingmühle (88 %) | 1,8 % |

Die Viskositäten, die angegeben werden, wurden in 2%iger wäßrigen Lösung unter Annahme von 5% Feuchtigkeit des Celluloseethers bei 20°C nach Brookfield ermittelt. Dies gilt auch für weitere Viskositätsangaben.

Es erfolgte keine erfindungsgemäße Versprödung, sondern ein Extrudieren der von der Reinigungsstufe noch Wasser enthaltenden Alkylcellulosen, Zerschneiden der Stränge, Trocknen sowie Zerkleinern in einer Hammermühle. Dabei konnte in keinem Fall eine Versprödung erreicht werden. Es sind angegeben in Abhängigkeit vom Ausgangsmaterial die gefundenen Korngrößen unter den Standarbdedingungen.

dieser Fahrweise wird nur verdichtet und nicht gemahlen. Eine geringfügige Zerkleinerung ist allerdings bei der Verdichtung nicht auszuschließen. Die Vertestigung (Versprödung) des Materials ist mit deutlich erkennbarer Formänderung verbunden. So kann bei einer Vertestigung in einer Schwingmühle das Material beispielsweise in Form von Schuppen anfallen.

Die Celluloseether werden der Versprödungsstufe in unverdichteter beziehungsweise verdichteter Form zugeführt. Die Schüttgewichte der unverdichteten, meist langfaserigen Einsatzmaterialien liegen zwischen 30 und 280 g/l, vorzugsweise 75 und 160 g/l. Die verdichteten Celluloseether dagegen weisen Schüttgewichte zwischen 280 und 480 g/l, vorzugsweise 320 und 370 g/l, auf und fallen in Granulat- beziehungsweise Pelletform in der Versprödungsstufe an.

Die Schüttgewichte im Zulauf zur ersten Verfahrensstufe entsprechen den vorher angegebenen, während sich der Wassergehalt unterscheidet. Erfindungsgemäß sind zwei Arbeitsbereiche bezüglich des Wassergehaltes möglich. Zum einen geht man vom feuchten Reaktionsprodukt mit Restfeuchten von 20 bis 80% Wasser, vorzugsweise 40 bis 60% Wasser, aus und zum anderen wird ein getrocknetes Produkt mit Restfeuchten von 5 bis 25%, vorzugsweise 12 bis 20% Wasser, eingesetzt. Diese Bereiche überschneiden sich zwar, jedoch ist dies von den spezifischen Eigenschaften der verschiedenen Ausgangsmaterialien abhängig und vom Maschinentyp, der zu Versprödung eingesetzt wird. Während für die Schwing- und Kugelmühle vorzugsweise 12 bis 20% Wasser gearbeitet wird, stehen bei Einsatz einer Pelletpresse beide Arbeitsbereiche offen.

Der Viskositätsabbau ist wegen des nur einmaligen Mühlendurchganges und infolge des geringen Mahleffektes vergleichsweise niedrig. Weiterhin wird zur Reduzierung des Abbaus erfindungsgemäß eine kühlbare Mühle eingesetzt. Die Kühlung sollte so beschaffen sein, daß eine Produkttemperatur von 85°C, vorzugsweise 55°C, am Auslauf nicht überschritten wird. Auf diese Art beträgt der Viskositätsabbau bei hochviskosen Celluloseethern ($\eta$ > 30000 mPa·s) je nach Fahrweise und Schüttgewicht nicht mehr als 40%.

Die versprödeten Produkte können anschließend erfindungsgemäß mit Hilfe einer Strahlmühle in Mikropulver überführt werden. Auf Grund der Sichtwirkung dieser Mühlen ist ein Absieben überflüssig, da der Überkornanteil meist weniger als 1% beträgt.

Überraschenderweise hat sich gezeigt, daß in diesem Mühlentyp die verfestigten Produkte leicht in Mikropulver überführt werden können. Dagegen sind Strahlmühlen nicht für unvertestigte und auch nicht für nicht erfindungsgemäß verdichtete Produkte geeignet, da diese Materialien wollig bleiben und der Zerkleinerungsgrad gering ist. Auch sind Strahlmühlen zum Herstellen solcher feinen Stäube, von denen eine besondere Explosionsgefahr ausgeht, aus sicherheitstechnischer Sicht gut geeignet, da sie keine bewegten Teile enthalten und daher keine Zündquelle im System vorhanden ist.

Die Korngrößenverteilung der in einer Strahlmühle zerkleinerten Produkte ist enger als die von mechanischen Mühlen. Wegen der größeren Homogenität resultieren Produkte mit erheblich besseren anwendungstechnischen Eigenschaften. Die mittlere Korngröße kann bei vorgegebener Mühlengröße über den Feststaffdurchsatz eingestellt werden. Es lassen sich so problemlos bei hohen Celluloseethedurchsätzen feine Stäube mit Korngrößenverteilung von 90% < 100 µm herstellen, während bei entsprechender Reduzierung des Durchsatzes Mikropulver mit Anteilen von 98% < 80 µm und auch 98% < 63 µm erhalten werden können. Mit dieser Mühle sind bei entsprechendem Feststoffdurchsatz sogar noch feinere Mikropulver produzierbar. Von besonderem Vorteil ist die Tatsache, daß in Strahlmühlen der Abbau der Makromoleküle vernachlässigbar klein ist, das heißt er läßt sich meßtechnisch meist nicht erfassen und liegt in fast allen Fällen unter 10%.

Die Trocknung beim Mahlen ist durch entsprechende Wassergehalte vor der Mahlung zu berücksichtigen. Durch Zusatz von vorgewärmter Luft beziehungsweise Gasen ist eine Mahltrocknung möglich, so daß eine separate Trockenstute entfallen kann. Unter den angegebenen Bedingungen resultieren Celluloseether mit Endwassergehalten von etwa 0,5 bis 12%, vorzugsweise 3 bis 6%.

Die Schüttgewichte der Produkte sind stark von der Korngrößenverteilung, vom Produkttyp und von der Viskosität der Celluloseether abhängig. Im allgemeinen haben unverdichtete und hochviskose Produkte mit hohem Feinkornanteil niedrigere Schüttgewichte als verdichtete, niedrigviskose und gröbere Celluloseether. Zwischen diesen beiden extremen Fällen, wobei einerseits Weine von 200 bis 300 g/l und andererseits Werte von 420 bis 480 g/l typisch sind, liegt das gesamte Spektrum der Kombinationen.

Der Einsatz einer Strahlmühle wird erst unterhalb einer bestimmten Korngrößenverteilung wirtschaftlich. Diese Grenze ist produktabhängig und nicht scharf zu definieren. Die Wirtschaftlichkeit kann bereits bei der Herstellung von feinen Stäuben (90% < 100 µ) gegeben sein.

Gemäß der Erfindung lassen sich Mikropulver aus Cellulbseethern herstellen, die nur geringe Abbauraten beziehungsweise Viskositätsverluste aufweisen. Daher sind nach diesem Verfahren Fein- und Mikropulver im Viskositätsbereich von circa 10000 bis 40000 bis 50000 mPa·s herstellbar.

Schließlich eignen sich die erfindungsgemäß hergestellten Mikropulver von Celluloseethern zur Herstellung von Tapetenkleistern.

Nach den bisherigen Erfahrungen gelingt die erfindungsgemäße Herstellung von Mikropulvern bei Einsatz

Tabelle 1b

| Ausgangsmaterial | Versprödung | % > 100 µm |
|---|---|---|
| Methylcellulose 4 000 mPa.s (96 %) | nein | 89,4 % |
| Methylcellulose 8 000 mPa.s (38 %) | nein | 28,1 % |
| Methylhydroxyethylcellulose 30 000 mPa.s (93 %) | nein | 88,7 % |
| Methylhydroxy-propylcellulose 20 000 mPa.s (98 %) | nein, aber Walzenverdichtung (31 %)[*] | 22,0 % |

[*] Zwischenmahlung in Prallmühle wegen Einzugsgröße der Strahlmühle notwendig

Beispiel 1

12,6 kg wollige Methylhydroxypropylcellulose mit einem Schüttgewicht von 160 g/l wurden pro Stunde in einer gekühlten Schwingmühle verfestigt. Das Produkt fiel schuppenförmig mit einem Schüttgewicht von 350 g/l und einer Temperatur von 45°C an. Die Viskosität des Celluloseethers ist durch die Verfestigung von 48000 auf 34 000 mPa.s gesunken. Eine nennenswerte Zerkleinerung des Materials konnte nicht beobachtet werden. Die Feinmahlung der vertestigten Methylhydroxypropylcellulose erfolgte in einer Strahlmühle bei einem Feststoffdurchsatz von 5 kg/h und einer Luftmenge von ca. 150 Nm³/h. Die folgende Korngrößenverteilung des gut rieselfähigen Produktes wurde gemessen :

43% > 32 µm ; 6% > 50 µm ; 1,5% > 63 µm.

Endviskosität : 33 300 mPa.s
Schüttgewicht : 280 g/l

Beispiel 2

40 kg/h einer Methylhydraxyethylcellulose mit einem Schüttgewicht von circa 200 g/l und einer Feuchte von 9% wurden in einer Presse pelletisiert. Die hierbei geringfügige Färbung des Produktes verschwindet aber während der Mahlung vollständig.

Die verfestigten Pellets wurden einerseits in einer Strahlmühle und andererseits in einer Pralltellermühle gemahlen.

Die Versuchsergebnisse (Ausgangsviskosität 23000 mPa.s) gehen aus der folgenden Aufstellung hervor, wobei die Resultate aus der Pralltellermühle zum Vergleich in Klammern gesetzt wurden :

Korngrößenverteilung : 66% (52M) > 32 µm
12% > 50 µm
1.3% > 63 µm
−(8%) > 125 µm
(2,5%) > 200 µm

Endviskosität : 19000 (21000) mPa.s
Schüttgewicht : 250 (330) g/l

Ähnliche Resultate werden erhalten, wenn man ein Produkt mit 48% Feuchte pelletiert, anschließend bis auf 8% trocknet und nachfolgend der Mahlung mit einer Pralltellermühle unterzieht. Allerdings stieg das Schüttgewicht des Feinpulvers auf 370 g/l an. In der nachfolgenden Tabelle 2 sind die Ergebnisse gemäß den vorstehenden Beispielen 1 und 2 hinsichtlich des erzielten Mahlgrades in einer Übersicht wiedergegeben, wobei in jeder Stufe nur ein Durchgang erfolgte.

Biespiel 3

16 kg/h einer Methylhydroxypropylcellulose mit einem Schüttgewicht von 150 g/l wurden in der gekühlten Schwingmühle versprödet. Nach dieser Verfestigung betrug das Schüttgewicht 430 g/l. Das produkt mit einer Ausgangsviskosität von 42 Pa.s wurde sowohl in der Strahlmühle als auch zum Vergleich in der Stittmühle

(Werte in Klammern) gemahlen :
Korngrößenverteilung :     61% (82%) > 32 µm
                                 17% (66%) > 50 µm
                                 4,5% (52%) > 63 µm
                                 1,1% > 100 µm
                                 (9%) > 125 µm

Endviskosität :     39 (40) Pa.s
Schüttgewuchy :     380 (420) g/l

## Tabelle 2

| 1. Versprödungsstufe | 2. Mahlstufe | Mahlgrad | | | |
|---|---|---|---|---|---|
| | | 90 % < 200 μm | 90 % < 100 μm | 98 % < 80 μm | 98 % < 63 μm |
| Schwing- bzw. Kugelmühle | Strahlmühle | + | + | + | + |
| Pelletpresse oder sonstige Brikettiereinrichtung | Strahlmühle | + | + | + | + |

+ erreicht

— nicht erreicht

EP 0 049 815 B2

## Ansprüche

1. Verfahren zur Herstellung von Mikropulvern, deren Korngröße zu mindestens 98 Gew.-% unter 100 µm liegt, aus Celluloseethern, dadurch gekennzeichnet, daß man
a) Celluloseether, die eine feinfaserige, beziehungsweise wattige, beziehungsweise wollige Struktur aufweisen, mittels einer Schwing- oder Kugelmühle, vorzugsweise in gekühlter Ausführung, oder Pelletpresse in eine so weit versprödete, verfestigte Form überführt, daß beim einmaligen Durchgang durch eine Laborstrahlmühle 98 Gew.-% des Materials kleiner als 100 µm ist (Auswahlkriterium und anschließend
b) das vorbehandelte Material einer Mahlung in einer Strahlmühle unterzieht, wober eine Korngrößenverteilung von mindestens 98 Gew.-% unter 100 µm erreicht wird.

2. Verfahren nach Anspruch 1, dadurch gekennzeichnet, daß man in der Mahlstufe gleichzeitig mit dem Mahlen auf 0,5 bis 12%, vorzugsweise 3 bis 6% trocknet.

3. Verfahren nach Ansprüchen 1 und 2, dadurch gekennzeichnet, daß verdichtete Celluloseether mit einem Schüttgewicht zwischen 280 und 480 g/l, vorzugsweise 320 und 370 g/l, eingesetzt werden.

4. Verfahren nach Ansprüchen 1 bis 3, dadurch gekennzeichnet, daß Celluloseether mit einem Schüttgewicht zwischen 30 und 280 g/l, vorzugsweise 75 und 160 g/l, eingesetzt werden.

5. Verfahren nach einem der Ansprüche 1 bis 4, dadurch gekennzeichnet, daß als Celluloseether Alkyl-, Alkylhydroxyalkyl- oder Carboxyalkylcellulosen mit einem Feuchtigkeitsgehalt von 0,5 bis 20, vorzugsweise 8 bis 15% eingesetzt wird.

6. Verwendung der nach dem Verfahren gemäß den Ansprüchen 1 bis 5 erhaltenen Produkte als Zusatz zu Mörtel und/oder Putzmassen sowie als Tapetenkleister.

## Revendications

1. Procédé de fabrication de micropoudres, dont la dimension de grain inférieure à 100 µm est d'au moins 98% en poids, en éthers cellulosiques, caractérisé en ce que
a) on convertit un éther cellulosique, qui présente une structure finement fibreuse, ouateuse ou laineuse, au moyen d'un broyeur oscillant ou à boulets, de préférence avec exécution à froid, ou au moyen d'une presse à pellets, en une forme suffisamment fragilisée et consolidée pour qu'au cours d'un seul passage à travers un désintégrateur à jet de laboratoire 98% en poids de la matière soit inférieure à 100 µm (critère de sélection), et en ce qu'ensuite
b) on soumet la matière prétraitée à un broyage dans un désintégrateur à jet, en atteignant une distribution des dimensions de grain inférieure à 100 µm d'au moins 98% en poids.

2. Procédé selon la revendication 1, caractérisé en ce que dans le stade de broyage, on sèche, simultanément avec le broyage, à 0,5-12%, de préférence à 3-6%.

3. Procédé selon les revendications 1 et 2, caractérisé en ce qu'on met en jeu des éthers cellulosiques densifiés ayant un poids en vrac entre 280 et 480 g/litre, de préférence entre 320 et 370 g/litre.

4. Procédé selon les revendications 1 et 2, caractérisé en ce qu'on utilise des éthers cellulosiques ayant un poids en vrac entre 30 et 280 g/litre, de préférence entre 75 et 160 g/litre.

5. Procédé selon l'une des revendications 1 à 4, caractérisé en ce qu'on utilise comme ethers cellulosiques des alcoyl-, alcoylhydroxyalcoyl- ou carboxyalcoylcelluloses ayant une teneur en humidité de 0,5 à 20, de préférence de 8 à 15%.

6. Utilisation des produits obtenus selon les revendications 1 à 5 comme additif pour mortier et/ou masses de crépissage de même que comme colle de tapissier.

## Claims

1. A process for the production of micropowders of cellulose ethers, of which at least 98% by weight have a particle size below 100 µm, characterized in that
a) cellulose ethers having a finely fibrous, cottonwool-like or wool-like structure are converted by means of a vibrating mill or ball mill, preferably of the cooled type, or pelletizing press into a form in which they are embrittled and hardened to such an extent that 98% by weight of the material is smaller than 100 µm in size after a single passage through a laboratory jet mill (selection criterion), after which
b) the pretreated material is ground in a jet mill until at least 98% by weight of the particles are smaller than 100 µm in size.

2. A process as claimed in Claim 1, characterized in that, in the grinding step, grinding is accompanied by drying to 0.5-12% and preferably to 3-6%.

3. A process as claimed in Claims 1 and 2, characterized in that compressed cellulose ethers having an apparent powder density of from 280 to 480 g/l, and preferably from 320 to 370 g/l are used.

4. A process as claimed in Claims 1 and 2, characterized in that cellulose ethers having an apparent powder density of from 30 to 280 g/l and preferably from 75 to 160 g/l are used.

5. A process as claimed in any of Claims 1 to 4, characterized in that alkyl, alkyl hydroxyalkyl or carboxyalkyl celluloses having a moisture content of from 0.5 to 20% and preferably from 8 to 15% are used as the cellulose ethers.

6. The use of the products obtained by the process claimed in Claims 1 to 5 as an additive to mortars and/or plasters and as wallpaper pastes.